(19) Europäisches Patentamt
European Patent Office
Office européen des brevets

(11) **EP 3 505 576 A1**

(12) **EUROPÄISCHE PATENTANMELDUNG**

(43) Veröffentlichungstag:
**03.07.2019   Patentblatt 2019/27**

(51) Int Cl.:
***C09D 5/02*** *(2006.01)*          ***C09D 7/61*** *(2018.01)*
***C09D 7/40*** *(2018.01)*

(21) Anmeldenummer: **17211222.9**

(22) Anmeldetag: **29.12.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(71) Anmelder: **DAW SE**
**64372 Ober-Ramstadt (DE)**

(72) Erfinder:
• **BRENNER, Thomas**
  **64367 Mühltal (DE)**
• **WESTMEIER, Johannes**
  **64572 Büttelborn (DE)**

• **BEFURT, Uwe**
  **64372 Ober-Ramstadt (DE)**
• **BÜCHNER, Doris**
  **64372 Ober-Ramstadt (DE)**
• **WINGENDER, Patrick**
  **64380 Rossdorf (DE)**
• **SEEGER, Alexander**
  **64739 Höchst (DE)**
• **BECKER, Daniel**
  **64367 Mühltal (DE)**

(74) Vertreter: **Metten, Karl-Heinz**
**Boehmert & Boehmert**
**Anwaltspartnerschaft mbB**
**Pettenkoferstrasse 22**
**80336 München (DE)**

(54) **BESCHICHTUNGSSTOFFE, BESCHICHTUNGEN AUS DIESEN BESCHICHTUNGSSTOFFEN SOWIE DEREN VERWENDUNG**

(57)    Die vorliegende Erfindung betrifft wässrige Beschichtungsstoffe enthaltend Füllstoffe, ein organisches Bindemittel und Additive sowie kein Titandioxid oder Titandioxid in einer Menge, gerechnet als Feststoffanteil, kleiner 1,0 Gewichtsprozent, bezogen auf das Gesamtgewicht des Beschichtungsstoffes. Ferner betrifft die Erfindung Farb- und Grundierungsanstriche auf einer Substratoberfläche, erhältlich durch ein- oder mehrmaliges Auftragen der erfindungsgemäßen Beschichtungsstoffe auf der Substratoberfläche. Außerdem betrifft die Erfindung die Verwendung der erfindungsgemäßen Beschichtungsstoffe für die Herstellung von oder als Dispersionsfarben, Grundierungen oder Putzmassen.

**EP 3 505 576 A1**

**Beschreibung**

Die vorliegende Erfindung betrifft wässrige Beschichtungsstoffe, insbesondere in Form von Dispersionsfarben, Grundierungen und Putzmassen, sowie Farb- und Grundierungsanstriche auf einer Substratoberfläche, erhältlich durch Auftragen der erfindungsgemäßen Beschichtungsstoffe. Außerdem betrifft die Erfindung die Verwendung der erfindungsgemäßen Beschichtungsstoffe für die Herstellung von oder als Dispersionsfarben Grundierungen und Putzmassen.

Wässrige Beschichtungsstoffe als Dispersionsfarbe, Grundierung oder Putzmasse zu verwenden, ist dem Fachmann bekannt. Die mit diesen Beschichtungsstoffen erhältlichen Beschichtungen haben regelmäßig mehrere Funktionen zu erfüllen. Neben einer dekorativen Oberflächengestaltung soll häufig auch Schutz gegen Feuchteeintritt und/oder Befall mit Pilzen, Algen oder Bakterien gewährleistet werden. Optisch einwandfreie Oberflächen mit hohem Deckvermögen werden dabei im Allgemeinen durch Verwendung von Titandioxid als Weißpigment erhalten. Dies hat seine Ursache unter anderem darin, dass Titandioxid über eine hohe Brechzahl sowie über eine sehr geringe Lichtabsorption verfügt. Des Weiteren sind die Titandioxidspezies Rutil sowie insbesondere Anatas fotokatalytisch aktiv und tragen zu einer fotokatalytischen Selbstreinigung von Oberflächen bei. Allerdings ist die Gewinnung von Titandioxid energie- und damit kostenintensiv. Auch müssen regelmäßig Vorkehrungen getroffen werden, um die Gefahr von Staubexplosionen zu minimieren. Schließlich hat das Komitee zur Risikobewertung (RAC) der Europäischen Chemikalienagentur (ECHA) empfohlen, Zubereitungen enthaltend signifikante Mengen an Titandioxid als Kanzerogen der Kategorie 2 einzustufen. Eine derartige Beeinflussung der Gesundheit durch Titandioxid tritt dabei allerdings nur dann auf, wenn der Mensch Titandioxid in kleinteiliger, staubförmiger Form aufnimmt, d.h. in einer Form, die mitunter bei der Pigmentherstellung selber und dem Abschleifen von Beschichtungsoberflächen enthaltend Titandioxid anzutreffen ist, nicht jedoch bei Kontakt mit wässrigen Beschichtungsstoffen enthaltend das Weißpigment Titandioxid.

Bislang fehlt es noch an einem Weißpigment, das einerseits sämtliche vorangehend geschilderten Vorteile von Titandioxid in sich vereint, gleichzeitig unter Gesundheitsaspekten völlig unbedenklich zu handhaben ist, jedoch nicht mit den genannten intrinsischen Nachteilen von Titandioxid behaftet ist.

In der DE 20 2017 104 644 U1 wird eine Dispersionsfarbe beschrieben, die ohne den Einsatz des Weißpigments Titandioxid auskommen soll. Als Alternative wird hierbei zurückgegriffen auf einen Calciumcarbonat-haltigen Komposit aus 30 bis 50 Gewichtsprozent eines präzipitierten Calciumcarbonats, 30 bis 50 Gewichtsprozent an Calcium-Hydroxid-Pigmentpartikeln und 10 bis 40 Gewichtsprozent an Wasserglas. Bei dieser Vorgehensweise ist jedoch von Nachteil, dass der Herstellung der Dispersionsfarbe stets der separate Schritte der Herstellung des Calciumcarbonat-haltigen Komposits vorgeschaltet werden muss.

Der vorliegenden Erfindung lag daher die Aufgabe zugrunde, Beschichtungsstoffe zur Verfügung zu stellen, die nicht mit den geschilderten Nachteilen der Beschichtungsstoffe des Stands der Technik behaftet sind. Ferner lag der Erfindung die Aufgabe zugrunde, Beschichtungsstoffe zur Verfügung zu stellen, die völlig ohne Titandioxid auskommen oder in denen Titandioxid nur noch in sehr geringen Mengen zugegen ist, die gleichwohl über ein hohes Deckvermögen verfügen.

Gemäß einer ersten Ausführungsvariante der Erfindung wurde ein wässriger Beschichtungsstoff, insbesondere für Fassadenbeschichtungen, gefunden, bestehend aus oder enthaltend

aa) Füllstoffe, bestehend aus oder umfassend

aa1) mindestens einen ersten Füllstoff aa1) mit einem D50-Wert im Bereich von 0,40 bis 1,2 $\mu$m, bevorzugt im Bereich von 0,50 bis 1,1 $\mu$m und besonders bevorzugt im Bereich von 0,50 bis 1,0 $\mu$m und insbesondere im Bereich von 0,60 bis 1,0 $\mu$m,

aa2) mindestens einen zweiten Füllstoff aa2), bestehend aus oder umfassend mindestens einen silikatischen Füllstoff, bevorzugt Zeolithe und/oder Schichtsilikate, besonders bevorzugt Kaolinite, Feldspate und/oder Muskovite, und

aa3) gegebenenfalls mindestens einen dritten Füllstoff aa3) mit einem D50-Wert im Bereich von größer 1,2 bis 4,0 $\mu$m, bevorzugt im Bereich von 1,2 bis 3,7 $\mu$m und besonders bevorzugt im Bereich von 1,3 bis 3,3 $\mu$m, sowie

aa4) gegebenenfalls mindestens einen weiteren Füllstoff, der nicht erster (aa1)), zweiter (aa2)) und dritter Füllstoff (aa3)) ist und der einen D50-Wert im Bereich von größer 4,0 bis 40 $\mu$m, bevorzugt im Bereich von 5,0 bis 30 $\mu$m und besonders bevorzugt im Bereich von 6,0 bis 25 $\mu$m, aufweist,

b) mindestens ein organisches Bindemittel,
c) kein Titandioxid oder Titandioxid in einer Menge, gerechnet als Feststoffanteil, kleiner 1,0 Gewichtsprozent, und

d) mindestens ein Additiv sowie

e) gegebenenfalls mindestens ein Wasserglas und/oder Kieselsol, insbesondere Wasserglas,

f) gegebenenfalls mindestens ein Alkylalkoxysilan, Alkylalkoxysiloxan, wasserlösliches Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon und

g) gegebenenfalls mindestens ein Pigment, das nicht Titandioxid ist;.

Besonders geeignete erfindungsgemäße Beschichtungsstoffe gemäß der ersten Ausführungsvariante umfassen dabei

5 bis 65 Gewichtsprozent, bevorzugt 10 bis 60 Gewichtsprozent, Füllstoffe aa), und/oder

0,50 bis 20 Gewichtsprozent, vorzugsweise 1 bis 20 Gewichtsprozent und besonders bevorzugt 1,5 bis 15 Gewichtsprozent Polymerdispersion b), jeweils bezogen auf den Festgehalt, und/oder

0 bis 0,99 Gewichtsprozent, bevorzugt 0,20 bis 0,98 Gewichtsprozent und besonders bevorzugt 0,30 bis 0,95 Gewichtsprozent, Titandioxid c), und/oder

0,10 bis 5,0 Gewichtsprozent, bevorzugt 0,20 bis 4,5 Gewichtsprozent und besonders bevorzugt 0,30 bis 3,0 Gewichtsprozent, an Additiven d), jeweils bezogen auf den Fest- bzw. Reinstoffanteil, und/oder

0 bis 20 Gewichtsprozent, bevorzugt 0,50 bis 15 Gewichtsprozent, an Pigment g), das nicht Titandioxid ist, und/oder

o bis 3,0 Gewichtsprozent, vorzugsweise 0,10 bis 2,0 Gewichtsprozent, besonders bevorzugt 0,15 bis 1,0 Gewichtsprozent, an Komponente f), bevorzugt Alkalialkylsilikonat, besonders bevorzugt Kaliummethylsilikonat, und/oder

o bis 5,0 Gewichtsprozent, bevorzugt 0,30 bis 3,0 Gewichtsprozent und besonders bevorzugt 0,50 bis 2,0 Gewichtsprozent, jeweils bezogen auf den Feststoffanteil, an Wasserglas e) und vorzugsweise kein Kieselsol, und/oder

0,05 bis 3,0 Gewichtsprozent, vorzugsweise 0,10 bis 2,0 Gewichtsprozent, besonders bevorzugt 0,15 bis 1,0 Gewichtsprozent, an dem mindestens einen Dispergier- und/oder Netzmittel h),

wobei die den Beschichtungsstoff bildenden Komponenten in der Summe sich stets zu 100,0 Gewichtsprozent addieren.

Hierbei sind solche erfindungsgemäße Beschichtungsstoffe besonders bevorzugt, die

5 bis 65 Gewichtsprozent, bevorzugt 10 bis 60 Gewichtsprozent, Füllstoffe aa) und

0,50 bis 20 Gewichtsprozent, vorzugsweise 1 bis 20 Gewichtsprozent und besonders bevorzugt 1,5 bis 15 Gewichtsprozent Polymerdispersion b), jeweils bezogen auf den Festgehalt, und

0 bis 0,99 Gewichtsprozent, bevorzugt 0,20 bis 0,98 Gewichtsprozent und besonders bevorzugt 0,30 bis 0,95 Gewichtsprozent, Titandioxid c) und

0,10 bis 5,0 Gewichtsprozent, bevorzugt 0,20 bis 4,5 Gewichtsprozent und besonders bevorzugt 0,30 bis 3,0 Gewichtsprozent, an Additiven d), jeweils bezogen auf den Fest- bzw. Reinstoffanteil, und

0,50 bis 20 Gewichtsprozent, bevorzugt 0,50 bis 15 Gewichtsprozent, an Pigment g), das nicht Titandioxid ist, und

0,10 bis 3,0 Gewichtsprozent, vorzugsweise 0,10 bis 2,0 Gewichtsprozent, besonders bevorzugt 0,15 bis 1,0 Gewichtsprozent, an Komponente f), bevorzugt Alkalialkylsilikonat, besonders bevorzugt Kaliummethylsilikonat, und

0,05 bis 3,0 Gewichtsprozent, vorzugsweise 0,10 bis 2,0 Gewichtsprozent, besonders bevorzugt 0,15 bis 1,0 Gewichtsprozent, an dem mindestens einen Dispergier- und/oder Netzmittel h) sowie gegebenenfalls

0 bis 5,0 Gewichtsprozent, bevorzugt 0,30 bis 3,0 Gewichtsprozent und besonders bevorzugt 0,50 bis 2,0 Gewichtsprozent, jeweils bezogen auf den Feststoffanteil, an Wasserglas e) und vorzugsweise kein Kieselsol, umfassen,

wobei die den Beschichtungsstoff bildenden Komponenten in der Summe sich stets zu 100,0 Gewichtsprozent addieren.

Besonders zufriedenstellende Beschichtungen hinsichtlich des Nass- und Trockendeckvermögens stellen sich auch mit solchen erfindungsgemäßen Beschichtungsstoffen der ersten Ausführungsvariante ein, bei denen die Füllstoffe aa)

2 bis 35 Gewichtsprozent, bevorzugt 4 bis 25 Gewichtsprozent und besonders bevorzugt 6 bis 15 Gewichtsprozent, an dem ersten Füllstoff gemäß aa1), insbesondere Calciumcarbonat, und

2 bis 25 Gewichtsprozent, bevorzugt 4 bis 20 Gewichtsprozent und besonders bevorzugt 5 bis 17 Gewichtsprozent, an dem zweiten Füllstoff gemäß aa2), insbesondere calciniertes Kaolin, sowie

0 bis 35 Gewichtsprozent, bevorzugt 4 bis 30 Gewichtsprozent und besonders bevorzugt 10 bis 25 Gewichtsprozent, an dem dritten Füllstoff gemäß aa3), insbesondere Calciumcarbonat, und

0 bis 61 Gewichtsprozent, bevorzugt 6 bis 35 Gewichtsprozent und besonders bevorzugt 10 bis 30 Gewichtsprozent, an dem weiteren Füllstoff gemäß aa4) umfassen oder hieraus bestehen, wobei die Füllstoffe aa1) und aa2) sowie gegebenenfalls aa3) und aa4) sich stets zu einen Füllstoffgehalt im Bereich von 5 bis 65 Gewichtsprozent des Gesamtgewicht des Beschichtungsstoffes, bevorzugt im Bereich von 10 bis 60 Gewichtsprozent, addieren.

Bevorzugt sind dabei auch solche erfindungsgemäßen Beschichtungsstoffe der ersten Ausführungsvariante, bei denen die Füllstoffe aa)

4 bis 25 Gewichtsprozent und bevorzugt 6 bis 15 Gewichtsprozent an Calciumcarbonat als dem ersten Füllstoff gemäß aa1) und

4 bis 20 Gewichtsprozent und bevorzugt 5 bis 17 Gewichtsprozent an calciniertem Kaolin als dem zweiten Füllstoff gemäß aa2) und

4 bis 30 Gewichtsprozent und bevorzugt 10 bis 25 Gewichtsprozent an Calciumcarbonat als dritten Füllstoff gemäß aa3), und

6 bis 35 Gewichtsprozent und bevorzugt 10 bis 30 Gewichtsprozent an dem weiteren Füllstoff gemäß aa4) umfassen oder hieraus bestehen, wobei die Füllstoffe aa1), aa2), aa3) und aa4) sich stets zu einen Füllstoffgehalt im Bereich von 5 bis 65 Gewichtsprozent des Gesamtgewichts des Beschichtungsstoffes, bevorzugt im Bereich von 10 bis 60 Gewichtsprozent, addieren.

Die Partikelgröße $D_{50}$ der vorangehend genannten Füllstoffe kann z.B. gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern und Momenten aus Partikelgrößenverteilungen) ermittelt werden. Für die Bestimmung der D50-Werte kann dabei z.B. auf den sogenannten Laser Scattering Particle Size Distribution Analyser, wie von der Firma Horiba unter der Gerätebezeichnung "LA 950 V2" erhältlich, zurückgegriffen werden.

Gemäß einer weiteren Ausgestaltung der ersten Ausführungsvariante der Erfindung sind solche erfindungsgemäßen Beschichtungsstoffe besonders geeignet, deren berechnete Pigment-Volumen-Konzentration (PVK) die der kritischen Pigment-Volumen-Konzentration der aus dem Beschichtungsstoff erhältlichen Beschichtung entspricht oder die vorzugsweise oberhalb dieser kritischen Pigment-Volumen-Konzentration, insbesondere bis etwa 10% oder bis etwa 5% oberhalb der kritischen Pigment-Volumen-Konzentration, liegt. Die kritische Pigment-Volumen-Konzentration liegt hierbei regelmäßig im Bereich von 55 bis 85, bevorzugt im Bereich von 60 bis 80 und besonders bevorzugt im Bereich von 65 bis 75.

Die Pigment-Volumen-Konzentration PVK der Beschichtungsstoffe kann gemäß der folgenden Formel berechnet werden:

$$PVK\,[\%] = \left(\sum V_{Pigmente} + \sum V_{Füllstoffe} \,/\, \sum V_{Pigmente} + \sum V_{Füllstoffe} + \sum V_{Bindemittel}\right) \times 100.$$

Die kritische Pigment-Volumen-Konzentration (KPVK) ist im Sinne von ISO 4618:2014(de) als ein bestimmter Wert der PVK definiert, bei welchem die Hohlraume zwischen sich berührenden Feststoffteilchen (hier: Pigmente und Füllstoffe) im Anstrichfilm gerade noch mit Bindemittel gefüllt sind. Die Lage der KPVK kann z.B. durch den Verlauf von Filmeigenschaften wie der Filmspannung bestimmt werden. Dazu legt man regelmäßig eine PVK-Reihe an, indem man ein bestimmtes Dispersionsfarben-Mahlgut mit der der jeweiligen PVK entsprechenden Menge an Kunststoffdispersion vermischt. Hierbei hat es sich als zweckmäßig erwiesen, zunächst größere PVK-Abstände zu wählen, um eine erste Übersicht zu erhalten. Danach kann man zur Ermittlung der genauen Lage der KPVK im vermuteten Bereich der KPVK kleinere PVK-Intervalle gewählt werden. Die Filmspannung hat bekanntlich bei der KPVK ein Maximum. Dies wird durch ein Maximum an Krümmung der Filme angezeigt. Aus dem Grad der Krümmung lässt sich sodann die Stärke der Filmspannung ermitteln. Die Reproduzierbarkeit dieser Methode liegt im Allgemeinen bei $\pm$ 1 PVK-Einheit (s.a. Dellef Gysau, "Füllstoffe - Grundlagen und Anwendungen", Vincentz Network GmbH & Co. KG, Hannover, 2005).

Die der Erfindung zugrunde liegende Aufgabe wird gemäß der ersten Ausführungsvariante der vorliegenden Erfindung insbesondere auch dadurch in besonders zuverlässiger Weise gelöst, dass in den Beschichtungsstoffen der mindestens eine erste Füllstoff aa1) ausgewählt ist aus der Gruppe bestehend aus silikatischen Füllstoffen, Calciumcarbonat-basierten Füllstoffen und beliebigen Mischungen hiervon, bevorzugt Calciumcarbonat; und/oder dass der Füllstoff aa2) calcinierte oder nicht-calcinierte Schichtsilikate darstellen, bevorzugt Kaolinite, Feldspate und/oder Muskovite, und besonders bevorzugt calciniertes Kaolin, und/oder dass der mindestens eine dritte Füllstoff aa3) ausgewählt ist aus der Gruppe bestehend aus Calciumcarbonat-basierten Füllstoffen, bevorzugt Calciumcarbonat, silikatischen Füllstoffen und beliebigen Mischungen hiervon und/oder dass der weitere Füllstoff aa4) ausgewählt ist aus der Gruppe bestehend aus Calciumcarbonat-basierten Füllstoffen, silikatischen Füllstoffen und beliebigen Mischungen hiervon und insbesondere Calciumcarbonat, Muskovit, Feldspate und/oder Glimmer darstellt.

Für die vorangehend genannten Füllstoffe geeignete Schichtsilikate wie insbesondere Kaolinite und Muskovite zeichnen sich auch dadurch aus, dass bei diesen die terminalen O-Atome einer Silicatschicht mit Kationen, insbesondere ausgewählt aus $Mg^{2+}$, $Ca^{2+}$, $Al_3^+$ oder $Fe^{2+}$, verbunden sind, die oktaedrisch koordiniert sind. Unter den Feldspaten sind Alkalifeldspate bevorzugt. Unter letzteren wird bevorzugt auf Natriumfeldspat zurückgegriffen.

Geeignete Füllstoffe aa2) umfassen neben den vorgehend genannten Aluminosilikaten ebenfalls Zeolithe. In einem Zeolith laufen der Vierbindigkeit der tetraedrisch koordinierten Atome entsprechend in jeder Ecke der Raumnetzstruktur vier Kanten zusammen.

Hierbei sind solche erfindungsgemäßen Beschichtungsstoffe gemäß der ersten Ausführungsvariante besonders geeignet, bei denen

der mindestens eine erste Füllstoff aa1) ausgewählt ist aus der Gruppe bestehend aus Calciumcarbonat,; und bei denen der zweite Füllstoff aa2) calcinierte Kaolinite, Feldspate und/oder Muskovite, und bevorzugt calciniertes Kaolin, und bei denen

der mindestens eine dritte Füllstoff aa3) Calciumcarbonat, ist, und bei denen

der weitere Füllstoff aa4) ausgewählt ist aus der Gruppe bestehend aus Calciumcarbonat-basierten Füllstoffen, silikatischen Füllstoffen und beliebigen Mischungen hiervon und insbesondere Calciumcarbonat, Muskovit, Natriumfeldspat und/oder Glimmer darstellt.

Gemäß einer zweiten Ausführungsvariante der Erfindung wurde ein wässriger Beschichtungsstoff, insbesondere für Beschichtungen im Innenbereich, gefunden, bestehend aus oder enthaltend

ab) Füllstoffe, bestehend aus oder umfassend

ab1) einen ersten Füllstoff ab1) mit einer mindestens bimodalen, insbesondere bimodalen, Korngrößenverteilung mit einem ersten lokalen Maximum im Bereich von 0,40 bis 1,5 $\mu$m, bevorzugt im Bereich von 0,60 bis 1,2 $\mu$m, und einem zweiten lokalen Maximum im Bereich von 6,0 bis 22 $\mu$m, bevorzugt im Bereich von 7,0 bis 19 $\mu$m, und/oder

ab2) einen zweiten Füllstoff ab2-1) mit einem mittleren Partikeldurchmesser D50 im Bereich von 0,40 bis 1,5 $\mu$m, bevorzugt im Bereich von 0,60 bis 1,2 $\mu$m, und einen dritten Füllstoff ab2-2) mit einem mittleren Partikeldurchmesser D50 im Bereich von 6,0 bis 22 $\mu$m, bevorzugt im Bereich von 7,0 bis 19 $\mu$m,

ab3) gegebenenfalls mindestens einen weiteren Füllstoff ab3), der nicht ein Füllstoff gemäß ab1) und ab2) ist,

b) mindestens ein organisches Bindemittel,

c) kein Titandioxid oder Titandioxid in einer Menge, gerechnet als Feststoffanteil, kleiner 1,0 Gewichtsprozent, bezogen auf das Gesamtgewicht des Beschichtungsstoffs, und

d) mindestens ein Additiv sowie

e) gegebenenfalls mindestens ein Wasserglas und/oder Kieselsol, insbesondere Wasserglas,

f) gegebenenfalls Alkylalkoxysilan, Alkylalkoxysiloxan, wasserlösliches Alkalialkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon, und

g) gegebenenfalls mindestens ein Pigment, das nicht Titandioxid ist.

In der zweiten Ausführungsvariante der Erfindung kann die Komponente ab1) mit einem ersten Füllstoff mit mindestens bimodaler Korngrößenverteilung, wie vorangehend spezifiziert, vorliegen. Alternativ können darin auch die Komponente ab2) mit einem zweiten Füllstoff ab2-1) mit der genannten mittleren Teilchengröße und ein dritter Füllstoff ab2-2) mit der ebenfalls vorangehend genannten mittleren Teilchengröße vorliegen. Der zweite Füllstoff ab2-1) und der dritte Füllstoff ab2-2) liegen demgemäß in einer besonders bevorzugten Ausgestaltung mit einer jeweils monomodalen Korngrößenverteilung vor. Des Weiteren ist es ebenfalls möglich, dass in den erfindungsgemäßen Beschichtungsstoffen gemäß der zweiten Ausführungsvariante der Erfindung neben dem ersten Füllstoff ab1) auch der zweite Füllstoff ab2-1) oder der dritte Füllstoff ab2-2) vorhanden sind. Ferner können neben dem ersten Füllstoff ab1) auch der vorangehend spezifizierte zweite Füllstoff ab2-1) und der dritte Füllstoff ab2-2) gleichzeitig vorhanden sein.

In einer besonders geeigneten Ausführungsform umfasst dieser Beschichtungsstoff gemäß der zweiten Ausführungsvariante der Erfindung

ab) Füllstoffe, bestehend aus oder umfassend

ab1) einen ersten Füllstoff ab1) mit einer bimodalen Korngrößenverteilung mit einem ersten lokalen Maximum im Bereich von 0,40 bis 1,5 $\mu$m, bevorzugt im Bereich von 0,60 bis 1,2 $\mu$m, und einem zweiten lokalen Maximum im Bereich von 6,0 bis 22 $\mu$m, bevorzugt im Bereich von 7,0 bis 19 $\mu$m, oder

ab2) einen zweiten Füllstoff ab2-1) mit einem mittleren Partikeldurchmesser D50 im Bereich von 0,40 bis 1,5

μm, bevorzugt im Bereich von 0,60 bis 1,2 μm, und einen dritten Füllstoff ab2-2) mit einem mittleren Partikeldurchmesser D50 im Bereich von 6,0 bis 22 μm, bevorzugt im Bereich von 7,0 bis 19 μm, und

ab3) mindestens einen weiteren Füllstoff ab3), der nicht ein Füllstoff gemäß ab1) und ab2) ist,

b) mindestens ein organisches Bindemittel,

c) kein Titandioxid oder Titandioxid in einer Menge, gerechnet als Feststoffanteil, kleiner 1,0 Gewichtsprozent, bezogen auf das Gesamtgewicht des Beschichtungsstoffs, und

d) mindestens ein Additiv sowie

e) gegebenenfalls mindestens ein Wasserglas und/oder Kieselsol, insbesondere Wasserglas,

f) Alkylalkoxysilan, Alkylalkoxysiloxan, wasserlösliches Alkalialkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon, und

g) mindestens ein Pigment, das nicht Titandioxid ist.

Besonders geeignete erfindungsgemäße Beschichtungsstoffe gemäß der zweiten Ausführungsvariante umfassen dabei

5 bis 65 Gewichtsprozent, bevorzugt 10 bis 60 Gewichtsprozent, Füllstoffe ab), und/oder

0,50 bis 20 Gewichtsprozent, vorzugsweise 1 bis 20 Gewichtsprozent und besonders bevorzugt 1,5 bis 15 Gewichtsprozent Polymerdispersion b), jeweils bezogen auf den Festgehalt, und/oder

0 bis 0,99 Gewichtsprozent, bevorzugt 0,20 bis 0,98 Gewichtsprozent und besonders bevorzugt 0,30 bis 0,95 Gewichtsprozent, Titandioxid c), und/oder

0 bis 5,0 Gewichtsprozent, bevorzugt 0,30 bis 3,0 Gewichtsprozent und besonders bevorzugt 0,50 bis 2,0 Gewichtsprozent, jeweils bezogen auf den Feststoffanteil, an Wasserglas e) und vorzugsweise kein Kieselsol, und/oder

0,10 bis 5,0 Gewichtsprozent, bevorzugt 0,20 bis 4,5 Gewichtsprozent und besonders bevorzugt 0,30 bis 3,0 Gewichtsprozent, an Additiven d), jeweils bezogen auf den Fest- bzw. Reinstoffanteil, und/oder

0 bis 3,0 Gewichtsprozent, vorzugsweise 0,10 bis 2,0 Gewichtsprozent, besonders bevorzugt 0,15 bis 1,0 Gewichtsprozent, an Komponente f), bevorzugt Alkalialkylsilikonat, besonders bevorzugt Kaliummethylsilikonat, und/oder

0 bis 20 Gewichtsprozent, bevorzugt 0,50 bis 15 Gewichtsprozent, an Komponente g), und/oder

0,05 bis 3,0 Gewichtsprozent, vorzugsweise 0,10 bis 2,0 Gewichtsprozent, besonders bevorzugt 0,15 bis 1,0 Gewichtsprozent, an Komponente h),

wobei die den Beschichtungsstoff bildenden Komponenten in der Summe sich stets zu 100,0 Gewichtsprozent addieren.

Ferner sind hierbei auch solche Ausführungsformen bevorzugt, die

5 bis 65 Gewichtsprozent, bevorzugt 10 bis 60 Gewichtsprozent, Füllstoffe ab), und

0,50 bis 20 Gewichtsprozent, vorzugsweise 1 bis 20 Gewichtsprozent und besonders bevorzugt 1,5 bis 15 Gewichtsprozent Polymerdispersion b), jeweils bezogen auf den Festgehalt, und

o bis 0,99 Gewichtsprozent, bevorzugt 0,20 bis 0,98 Gewichtsprozent und besonders bevorzugt 0,30 bis 0,95 Gewichtsprozent, Titandioxid c), und

o bis 5,0 Gewichtsprozent, bevorzugt 0,30 bis 3,0 Gewichtsprozent und besonders bevorzugt 0,50 bis 2,0 Gewichtsprozent, jeweils bezogen auf den Feststoffanteil, an Wasserglas e) und vorzugsweise kein Kieselsol, und

0,10 bis 5,0 Gewichtsprozent, bevorzugt 0,20 bis 4,5 Gewichtsprozent und besonders bevorzugt 0,30 bis 3,0 Gewichtsprozent, an Additiven d), jeweils bezogen auf den Fest- bzw. Reinstoffanteil, und

0,1 bis 3,0 Gewichtsprozent, vorzugsweise 0,10 bis 2,0 Gewichtsprozent, besonders bevorzugt 0,15 bis 1,0 Gewichtsprozent, an Komponente f), bevorzugt Alkalialkylsilikonat, besonders bevorzugt Kaliummethylsilikonat, und

0,50 bis 20 Gewichtsprozent, bevorzugt 0,50 bis 15 Gewichtsprozent, an Komponente g), und

0,05 bis 3,0 Gewichtsprozent, vorzugsweise 0,10 bis 2,0 Gewichtsprozent, besonders bevorzugt 0,15 bis 1,0 Gewichtsprozent, an Komponente h) umfassen,

wobei die den Beschichtungsstoff bildenden Komponenten in der Summe sich stets zu 100,0 Gewichtsprozent addieren.

Besonders zufriedenstellende Beschichtungen hinsichtlich des Nass- und Trockendeckvermögens stellen sich auch mit solchen erfindungsgemäßen Beschichtungsstoffen der zweiten Ausführungsvariante ein, bei denen die Füllstoffe ab)

4 bis 50 Gewichtsprozent, bevorzugt 5 bis 40 Gewichtsprozent und besonders bevorzugt 10 bis 30 Gewichtsprozent, an dem ersten Füllstoff gemäß ab1), insbesondere Calciumcarbonat, und

1 bis 61 Gewichtsprozent, bevorzugt 2 bis 30 Gewichtsprozent, an dem weiteren Füllstoff gemäß ab3),

oder

2 bis 30 Gewichtsprozent, bevorzugt 4 bis 27 Gewichtsprozent und besonders bevorzugt 8 bis 25 Gewichtsprozent, an dem zweiten Füllstoff gemäß ab2), insbesondere mindestens einen silikatischen Füllstoff, und

2 bis 30 Gewichtsprozent, bevorzugt 4 bis 27 Gewichtsprozent und besonders bevorzugt 8 bis 25 Gewichtsprozent, an dem dritten Füllstoff gemäß ab2), insbesondere synthetischem Calciumcarbonat, und

1 bis 61 Gewichtsprozent, bevorzugt 4 bis 30 Gewichtsprozent und besonders bevorzugt 8 bis 20 Gewichtsprozent, an dem weiteren Füllstoff gemäß ab3) umfassen oder hieraus bestehen, wobei die Füllstoffe ab1) und ab2) sowie gegebenenfalls ab3) sich stets zu einen Füllstoffgehalt im Bereich von 5 bis 65 Gewichtsprozent, bevorzugt im Bereich von 10 bis 60 Gewichtsprozent, addieren.

Gemäß einer weiteren Ausgestaltung der zweiten Ausführungsvariante der Erfindung sind solche erfindungsgemäßen Beschichtungsstoffe, insbesondere Dispersionsfarben, besonders geeignet, deren berechnete Pigment-Volumen-Konzentration (PVK) der kritischen Pigment-Volumen-Konzentration der aus dem Beschichtungsstoff erhältlichen Beschichtung entspricht oder deren berechnete Pigment-Volumen-Konzentration vorzugsweise oberhalb dieser kritischen Pigment-Volumen-Konzentration liegt, beispielsweise bis 10 % oder bis 5 % oberhalb der kritischen Pigment-Volumen-Konzentration. Die kritische Pigment-Volumen-Konzentration liegt hierbei regelmäßig im Bereich von 55 bis 85, bevorzugt im Bereich von 60 bis 80 und besonders bevorzugt im Bereich von 65 bis 75.

Die der Erfindung zugrunde liegende Aufgabe wird gemäß der zweiten Ausführungsvariante der vorliegenden Erfindung insbesondere auch dadurch gelöst, dass in den Beschichtungsstoffen

der mindestens eine erste Füllstoff ab1) ausgewählt ist aus der Gruppe bestehend aus silikatischen Füllstoffen, Calciumcarbonat-basierten Füllstoffen und beliebigen Mischungen hiervon, bevorzugt Calciumcarbonat; und/oder dass

der Füllstoff ab2-1) und der Füllstoff ab2-2) calcinierte oder nicht-calcinierte Schichtsilikate darstellen, bevorzugt Kaolinite, Feldspate, insbesondere Natriumfeldspate, und/oder Muskovite, und besonders bevorzugt calciniertes Kaolin, und/oder dass

der weitere Füllstoff ab3) ausgewählt ist aus der Gruppe bestehend aus Calciumcarbonat-basierten Füllstoffen, silikatischen Füllstoffen und beliebigen Mischungen hiervon und insbesondere Calciumcarbonat, Muskovit, Natriumfeldspat und/oder Glimmer darstellt.

Hierbei sind solche erfindungsgemäßen Beschichtungsstoffe besonders vorteilhaft, bei denen

der mindestens eine erste Füllstoff ab1) ausgewählt ist aus der Gruppe bestehend aus silikatischen Füllstoffen, Calciumcarbonat-basierten Füllstoffen und beliebigen Mischungen hiervon, bevorzugt Calciumcarbonat; und/oder dass

der Füllstoff ab2-1) und der Füllstoff ab2-2) calcinierte oder nicht-calcinierte Schichtsilikate darstellen, bevorzugt Kaolinite, Feldspate, insbesondere Natriumfeldspat, und/oder Muskovite, und besonders bevorzugt calciniertes Kaolin, und/oder dass

der weitere Füllstoff ab3) ausgewählt ist aus der Gruppe bestehend aus Calciumcarbonat-basierten Füllstoffen, silikatischen Füllstoffen und beliebigen Mischungen hiervon und insbesondere Calciumcarbonat, Muskovit, Natriumfeldspat und/oder Glimmer darstellt.

In den vorangehend geschilderten Ausführungsformen, in denen nicht ausdrücklich die Anwesenheit von synthetischem Calciumcarbonat verlangt wird, sondern von Calciumcarbonat als solchem, können hierunter im Sinne der Erfindung natürliches Calciumcarbonat, synthetisches Calciumcarbonat und Mischungen hiervon verstanden werden. Synthetisches Calciumcarbonat ist dem Fachmann auch unter "precipitated calcium carbonate" bzw. unter dem Akronym PCC bekannt. Ferner werden Calciumcarbonat-basierte Füllstoffe häufig auch als calcitische Füllstoffe bezeichnet.

Die erfindungsgemäßen Beschichtungsstoffe eignen sich grundsätzlich für den Einsatz als Dispersionsfarbe, Grundierung oder Putzmasse. Die Beschichtungsstoffe der gemäß der ersten Ausführungsvariante der Erfindung sind besonders bevorzugt für den Einsatz als Fassadenfarbe geeignet, während die Beschichtungsstoffe gemäß der zweiten Ausführungsvariante der Erfindung besonders bevorzugt als Dispersionsfarbe im Innenbereich verwendet werden kann.

Der Wassergehalt der erfindungsgemäßen Beschichtungsstoffe liegt dabei üblicherweise im Bereich von 20 bis 60 Gewichtsprozent, bevorzugt im Bereich von 25 bis 55 Gewichtsprozent und besonders bevorzugt im Bereich von 30 bis 50 Gewichtsprozent, wobei der Wassergehalt in den erfindungsgemäßen Dispersionsfarben regelmäßig größer ist als der Wassergehalt in den erfindungsgemäßen Grundierungen und Putzmassen.

Die erfindungsgemäßen Beschichtungsstoffe gemäß der ersten und der zweiten Ausführungsvariante der Erfindung enthalten bevorzugt ferner mindestens ein Dispergiermittel und/oder mindestens ein Netzmittel (Komponente h)). Auf den Einsatz von Dispergiermitteln wird insbesondere bei Anwesenheit von Titandioxid und/oder von dem mindestens einen Pigment g), das nicht Titandioxid ist, in den erfindungsgemäßen Beschichtungsstoffen, insbesondere in den erfindungsgemäßen Dispersionsfarben, zurückgegriffen. Netzmittel kommen hingegen bevorzugt bei erfindungsgemäßen Beschichtungsstoffen in Form von Grundierungen zum Einsatz. Unter den Netz- bzw. Dispergiermitteln sind im Allgemeinen die nichtionischen oberflächenaktiven Netz- und/oder Dispergiermittel bevorzugt. Besonders geeignete Netz- und/oder Dispergiermittel können dabei ausgewählt werden aus der Gruppe bestehend aus Natrium- oder Ammoniumpolyacrylaten, Kaliumpolyacrylaten, Polyphosphaten, EO/PO-Blockco-polymeren und deren beliebigen Mischungen. Bevorzugt wird unter den geeigneten Netz- und/oder Dispergiermitteln auf Ethylendiamin-EO/PO-Blockcopolymere zurückgegriffen.

Geeignete Dispergiermittel umfassen zum Beispiel polyanionische Dispergiermittel. Diese können zweckmäßigerweise ausgewählt sein aus der Gruppe bestehend aus Polycarboxylaten, insbesondere Salze von Polyacrylsäuren, Polyphosphaten, insbesondere lineare Polyphosphate und/oder zyklische Metaphosphate, und beliebigen Mischungen hiervon. Bevorzugt wird auf die Salze von Polyacrylsäuren zurückgegriffen. Als Dispergiermittel werden regelmäßig solche Substanzen bezeichnet, die die festen partikulären Bestandteile, insbesondere Pigmente, in einer noch nicht ausgehärteten Beschichtungszusammensetzung in der Schwebe halten und eine Agglomeration dieser Teilchen, auch als Flokkulation bekannt, verhindern bzw. zurückdrängen. In Abgrenzung von Netzmitteln, bei denen es sich regelmäßig um niedrigmolekulare, amphiphile Substanzen handelt, umfassen Dispergiermittel im Allgemeinen gegen Flokkulation stabilisierende oligomere und polymere Verbindungen. Geeignete Netzmittel können demgemäß niedrigmolekulare, d.h. nicht-oligomere und nicht polymere Tenside umfassen, beispielsweise Fettalkoholsulfate oder Alkylphosphonate. Bevorzugt enthalten die erfindungsgemäßen Beschichtungsmassen das mindestens eine Dispergiermittel. Besonders geeignete sind diese erfindungsgemäßen Beschichtungsmassen im Wesentlichen frei von Netzmitteln.

Auch sind unter den erfindungsgemäßen Beschichtungsstoffe gemäß der ersten und der zweiten Ausführungsvariante solche besonders geeignet, um die der Erfindung zugrunde liegende Aufgabe zu lösen, in denen mindestens eine Verbindung der Komponente f) oder mindestens eine Verbindung der Komponente e) oder mindestens eine Verbindung der Komponente f) und mindestens eine Verbindung der Komponente f), vorzugsweise mindestens eine Verbindung der Komponente f) und keine Verbindung der Komponente f), zwingend enthalten ist, bevorzugt wasserlösliches Alkalialkylsilikonat und besonders bevorzugt Kaliummethylsilikonat. Erfindungsgemäße Beschichtungsstoffe, insbesondere erfindungsgemäßen Dispersionsfarben, umfassen demgemäß in einer besonders bevorzugten Ausgestaltung demgemäß ferner mindestens ein Alkylalkoxysilan, Alkylalkoxysiloxan, wasserlösliches Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon. Hierbei umfassen geeignete Alkylsilikonate insbesondere Verbindungen der Formel (II) HO-[Si(R$^3$)(OX)-O-]$_n$H, worin der Rest R$^3$ eine Alkylgruppe mit 1 bis 8 C-Atomen, X ein Kation und n eine Zahl im Bereich von 1 bis 6 bedeutet. Vorzugsweise liegt das Molgewicht dieser Alkylsilikonate im Bereich von 100 bis 500. In einer besonders geeigneten Ausgestaltung ist R$_3$ eine Methyl-, Ethyl-, i-Propyl- oder n-Propylgruppe, vorzugsweise eine Methylgruppe. Als Kationen sind insbesondere die Alkalimetalle, insbesondere Kalium, geeignet. Beispielhaft seien als solche bevorzugte Alkylsilikonate Kaliummethylsilikonat und Natriumpropylsilikonat genannt. Als besonders vorteilhaft hat sich Kaliummethylsilikonat erwiesen.

Insbesondere diejenigen erfindungsgemäßen Beschichtungsstoffe, die mindestens eine Verbindung der Komponente f) enthalten, können konservierungsmittelfrei ausgestaltet sein. Demgemäß stellt die vorliegende Erfindung ebenfalls ab auf solche Beschichtungsstoffe, die im Wesentlichen frei von Topf- und/oder Filmkonservierungsmitteln sind, bevorzugt frei von Topfkonservierungsmitteln, z.B. frei von Isothiazolinonen, und besonders bevorzugt frei von Topf- und Filmkonservierungsmitteln. Demgemäß sind mit der vorliegenden Erfindung Beschichtungsstoffe zugänglich, die frei von organischen bioziden Konservierungsmitteln und besonders bevorzugt frei von jeglichen Konservierungsmitteln sind.

Die erfindungsgemäßen Beschichtungsstoffe werden im Sinne der vorliegenden Erfindung im Einklang mit der "Vergabegrundlage für Umweltzeichen" der RAL gGmbH betreffend "Emissionsarme Innenwandfarben RAL-UZ 102" (Ausgabe Januar 2015) regelmäßig als konservierungsmittelfrei angesehen, wenn darin keine Konservierungsmittel oder Konservierungsmittel, auf die Einzelsubstanz bezogen (einschließlich Formaldehyd), in einer Menge kleiner 2 ppm, sowie in Bezug auf CIT (5-Chlor-2-methyl-4-isothiazolin) in einer Menge kleiner 0,5 ppm enthalten sind. Die erfindungsgemäßen wässrigen Beschichtungsstoffe können demgemäß auch für die biozidfreie Behandlung von Gebäudeflächen, z.B. Außenfassaden von Gebäuden, eingesetzt werden.

In denjenigen Ausführungsformen der erfindungsgemäßen Beschichtungsstoffe, die mindestens ein Pigment, das nicht Titandioxid ist, enthalten, wird hierfür bevorzugt zurückgegriffen auf synthetische Hohlpigmente, insbesondere solche mit einem D 50-Wert kleiner oder gleich 10 $\mu$m, bevorzugt mit einem D50-Wert kleiner oder gleich 5,0 $\mu$m und besonders bevorzugt mit einem D-50-Wert kleiner oder gleich 2,0 $\mu$m. Diese Hohlpigmente liegen in den erfindungsgemäßen Beschichtungsstoffen in einer Menge im Bereich von 0 bis 20, bevorzugt 0,5 bis 10 und besonders bevorzugt 1 bis 8 Gew.-%, jeweils bezogen auf das Gesamtgewicht des Beschichtungsstoffes, vor. Alternativ oder zusätzlich kann auch auf Pigmente zurückgegriffen werden, ausgewählt aus der Gruppe bestehend aus Zinksulfid, Zinkoxid, Baryt, Ruß, Eisenoxid, Chromoxid, Kobaltblau, Phtalocyaninpigmenten, Spinellpigmenten und Nickel- und Chromtitanat und deren Mischungen. Bevorzugt wird hierbei auf Zinksulfid und/oder Zinkoxid zurückgegriffen. Diese liegen in den erfindungsgemäßen Beschichtungsstoffen bevorzugt in einer Menge im Bereich von 1 bis 25, bevorzugt 5 bis 20, besonders bevorzugt 3 bis 15 Gew.-%, jeweils bezogen auf das Gesamtgewicht des Beschichtungsstoffes, vor. Insbesondere durch Mitverwendung von Zinksulfid, vorzugsweise in den genannten Mengenbereichen, lassen sich mit den erfindungsgemäßen Beschichtungsstoffen sehr gute Resultate im Hinblick auf das Nass- und Trockendeckvermögen auch ohne Anwesenheit von Titandioxid erzielen.

Grundsätzlich können in den erfindungsgemäßen Beschichtungsstoffen auch die folgenden Pigmente einzeln oder in beliebiger Kombination zum Einsatz kommen. Mit diesen Pigmenten lassen sich zum Beispiel Pastellfarbtöne einstellen. Als solche geeigneten Pigmente seien exemplarisch anorganische Pigmente wie Bunt-, Schwarz- und Weißpigmente (Farbpigmente) sowie Glanzpigmente und organische Pigmente wie Bunt- und Schwarzpigmente genannt. Als geeignete anorganische Weißpigmente kommen zum Beispiel Zinkweiß, Farbenzinkoxid; Zinksulfid und/oder Lithopone und/oder Ettringit in Betracht. Unter den anorganischen Schwarzpigmenten kann zum Beispiel ausgewählt werden unter Eisenoxidschwarz, Eisen-Mangan-Schwarz, Spinellschwarz und/oder Ruß. Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb und/oder Bismutvanadat. Unter den genannten Pigmenten umfassen besonders geeignete Pigmente zum Beispiel Zinksulfid, Zinkoxid, Baryt, Ruß, Eisenoxid, Chromoxid, Kobaltblau, Spinellpigment, Nickeltitanat, Chromtitanat und deren beliebige Mischungen.

Als solche geeignete organischen Buntpigmente kann zum Beispiel zurückgegriffen werden auf C.I. Pigment Blue 15, C.I. Pigment Blue 15:1, C.I. Pigment Blue,15:2, C.I. Pigment Blue 15:3, C.I. Pigment Blue 15:4, C.I. Pigment Blue 15:6, C.I Pigment Blue 16, C.I. Pigment Green 7, C.I. Pigment Green 36, C.I. Pigment Orange 36, C.I. Pigment Orange 43, C.I. Pigment Orange 73, C.I. Pigment Red 122, C.I. Pigment Red 168, C.I. Pigment Red 179, C.I. Pigment Red 188, C.I. Pigment Red 254, C.I. Pigment Red 264, C.I. Pigment Red 282, C.I. Pigment Violett 19, C.I. Pigment Violett 23, Pigment Yellow 74, Pigment Yellow 83, Pigment Yellow 97, C.I. Pigment Yellow 110, C.I. Pigment Yellow 138, C.I. Pigment Yellow 154 oder beliebige Mischungen dieser Pigmente. Geeignete organische Pigmente können hierbei z.B. ausgewählt werden aus der Gruppe bestehend aus Monoazopigmenten, insbesondere C.I. Pigment Braun 25, C.I. Pigment Orange 5, 13, 38, oder 64, C.I. Pigment Rot 1, 2, 3, 4, 5, 8, 9, 12, 17, 22, 23, 31, 48: 1, 48: 2,48: 3, 49, 51: 1, 52: 1, 52: 2, 53, 53: 1, 53: 3, 57: 1, 58: 2, 58: 4, 112, 146, 148, 170, 175, 184, 185, 187, 191: 1, 208, 210, 245, 247 und/oder 251, C.I. Pigment Gelb 1, 3, 62, 73, 120, 151, 181, 183 und/oder 191 und/oder C.I. Pigment Violett 32, Diazopigmenten, insbesondere C.I. Pigment Orange 16, 34, 44 und/oder 72 und/oder C.I. Pigment Gelb 12, 13, 14, 16, 17, 81, 106, 113, 126, 127, 155, 174, 176, 18 und/oder 188, Diazokondensationspigmenten, insbesondere C.I. Pigment Gelb 91, 95 und/oder 128 und/oder C.I. Pigment Rot 144, 166, 214, 220, 221, 242 und/oder 262 und/oder C.I. Pigment Braun 23 und/oder 41, Anthrachinonpigmenten, insbesondere C.I. Pigment Gelb 147, 177 und/oder 199 und/oder C.I. Pigment Violett 31, Anthrapyrimidinpigmenten, insbesondere C.I. Pigment Gelb 108, Chinacridonpigmenten, insbesondere C.I. Pigment Orange 48 und/oder 49 und/oder C.I. Pigment Rot 202, 206 und/oder 209 und/oder Diketopyrrolopyrrolpigmenten, insbesondere C.I. Pigment Orange 71 und/oder 81 und/oder C.I. Pigment Rot 270 und/oder 272, Dioxazinpigmenten, insbesondere C.I. Pigment Violett 37 und/oder C.I. Pigment Blau 80, Flavanthronpigmenten, insbesondere C.I. Pigment Gelb 24, Indanthronpigmenten, insbesondere C.I. Pigment Blau 60 und/oder 64, Isoindolinpigmenten, insbesondere C.I. Pigment Orange 61 und/oder 69 und/oder C.I. Pigment Rot 260 und/oder C.I. Pigment Gelb 185, Isoindolinonpigmenten, insbesondere C.I. Pigment Gelb 109, 139 und/oder 173, Isoviolanthronpigmenten, insbesondere C.I. Pigment Violett 31, Metallkomplexpigmenten, insbesondere C.I. Pigment Rot 257 und/oder C.I. Pigment Gelb 117, 129, 151, 153 und/oder 177 und/oder C.I. Pigment Grün 8, Perinonpigmenten, insbesondere C.I. Pigment Orange 43, und/oder C.I. Pigment Rot 194, Perylenpigmenten, insbesondere C.I. Pigment Schwarz 31 und/oder C.I. Pigment Schwarz 32, C.I. Pigment Rot 123, 149, 178, 179, 190 und/oder 224 und/oder C.I. Pigment Violett 29, Pyranthronpigmenten, insbesondere C.I. Pigment Orange 51 und/oder C.I. Pigment Rot 216, Pyrazolochinazolonpigmenten, insbesondere C.I. Pigment Rot 251, Thioindigopigmenten, insbesondere C.I. Pigment Rot 88 und/oder 181 und/oder C.I. Pigment Violett 38, Triarylcarboniumpigmenten, insbesondere C.I. Pigment Blau 1, 61 und/oder 62 und/oder C.I. Pigment Grün 1 und/oder C.I. Pigment Rot 81, 81: 1 und/oder 169 und/oder C.I. Pigment Violett 1, 2, 3 und/oder 27.

Geeignete Pigmentmischungen können sowohl Mischungen aus anorganischen und organischen Pigmenten, als auch Mischungen aus unterschiedlichen anorganischen Pigmenten sowie Mischungen aus unterschiedlichen organischen Pigmenten umfassen.

In einer weiteren Ausführungsvariante können die erfindungsgemäßen Beschichtungsstoffe der ersten und der zweiten Ausführungsvariante, insbesondere wenn in Form einer Grundierung vorliegend, ferner Kieselsol und/oder Wasserglas enthalten. Wasserglas kann dabei ausgewählt sein aus der Gruppe bestehend aus Natrium-, Kalium-, Lithiumwasserglas und beliebigen Mischungen hiervon. Bevorzugt wird hierbei auf Kalium- und/oder Lithiumwasserglas zurückgegriffen. Der Gewichtsanteil von Wasserglas liegt dabei geeigneter Weise im Bereich von 0,10 bis 5,0 Gewichtsprozent, bevorzugt im Bereich von 0,30 bis 3,0 Gewichtsprozent und besonders bevorzugt im Bereich von 0,50 bis 2,0 Gewichtsprozent, jeweils bezogen auf den Feststoffanteil. Bei dem erfindungsgemäß eingesetzten Wasserglas handelt es sich regelmäßig um in Wasser lösliches bzw. gelöstes Wasserglas. Die wässrige Lösung wird auch als flüssiges Wasserglas bezeichnet. Für die erfindungsgemäßen Beschichtungsstoffe wird häufig auf eine 15 bis 40 gew.-%ige, insbesondere 20 bis 35 gew.-%ige wässrige Wasserglaslösung zurückgegriffen. In einer zweckmäßigen Ausgestaltung kann auf eine 22 Gew.-%ige oder eine 28 Gew.-%ige wässrige Wasserglaslösung zurückgegriffen werden. Geeignete Wassergläser lassen sich auch über ihre Molverhältniszahl $SiO_2$ : M2O (MVZ) charakterisieren. Diese liegt bevorzugt im Bereich von etwa 0,5 bis 4,0 und besonders bevorzugt im Bereich von 0,5 bis kleiner 2,5.

Geeignete Kieselsole sind dem Fachmann bekannt. Kieselsole sind im Handel in Form wässriger kolloidaler Suspensionen von Polykieselsäuremolekülen erhältlich. Das in wässrigen Systemen vorliegende Kieselsol ist vorzugsweise alkalisch und hat besonders bevorzugt einen pH-Wert größer 9. Die mittlere Partikelgröße des besonders geeigneten Kieselsols liegt üblicherweise bei 80 nm oder darunter und ist bevorzugt kleiner oder gleich 40 nm und insbesondere bevorzugt kleiner oder gleich 20 nm. Ganz besonders bevorzugt ist die mittlere Partikelgröße des Kieselsols kleiner oder gleich 10 nm.

In einer zweckmäßigen Ausgestaltung wird für die organischen Bindemittel b) der erfindungsgemäßen Beschichtungsstoffe der ersten und der zweiten Ausführungsvariante zurückgegriffen auf wässrige Dispersionen auf Basis von Vinylacetat/Ethylen-Copolymeren, Copolymeren auf Basis von Vinylaromaten, insbesondere Styrol, und Acrylaten und/oder Copolymeren auf Basis von Reinacrylaten. Besonders bevorzugt kommen bei den erfindungsgemäßen Beschichtungsstoffen wässrige Dispersionen auf Basis von Styrolacrylatcopolymeren zum Einsatz.

Demgemäß kommen als organische Bindemittel insbesondere auch solche in Frage, bei denen die in Wasser dispergierten oder dispergierbaren Polymere aus gleichen oder verschiedenen Monomeren gebildet sind, wobei mindestens eines der Monomere ein Acrylsäureester, Methacrylsäurester, Acrylsäure, Methacrylsäure, Vinylacetat, Vinylchlorid, Versatat, Acrylitril oder eine vinylaromatische Verbindung darstellt. In einer zweckmäßigen Ausgestaltung basiert das in Wasser dispergierte oder dispergierbare Polymer dabei auf i) (Meth)acrylsäureestern, insbesondere Acrylsäureestern, und Vinylaromaten, insbesondere Styrol, oder auf ii) Meth)acrylsäureestern, insbesondere Acrylsäureestern, und Vinylestern mindestens einer Koch-Säure, insbesondere der Versatinsäure, und gegebenenfalls Vinylaromaten, insbesondere Styrol.

Das organische Bindemittel umfasst in einer bevorzugten Ausführungsform in wässriger Dispersion vorliegende sphärische bzw. kugelförmige Kunststoffpartikel mit einem durchschnittlichen Durchmesser kleiner 3 µm, vorzugsweise kleiner 2 µm, besonders bevorzugt kleiner 1 µm, insbesondere enthaltend oder gebildet aus mindestens einem Acrylat-, Styrol-, insbesondere Styrolacrylat-, Vinylacetat-, Vinylpropionat- und/oder Urethanhomo- und/oder -copolymeren oder einer beliebigen Mischung hiervon. Die genannten Kunststoffpartikel bzw. -kugeln weisen in einer besonders zweckmäßigen Ausgestaltung einen durchschnittlichen Durchmesser kleiner 500 nm, insbesondere kleiner 250 nm oder 200 nm, beispielsweise im Bereich von 150 nm, auf. Das organische Bindemittel liegt in einer bevorzugten Ausgestatlung in Form einer Styrolacrylatcopolymerdispersion vor.

Der pH-Wert der erfindungsgemäßen Beschichtungsstoffe liegt bevorzugt im Bereich von 8,5 bis 12 und besonders bevorzugt im Bereich von 9 bis 11,5 bzw. wird bevorzugt auf einen pH-Wert im Bereich von 8,5 bis 12 und besonders bevorzugt im Bereich von 9 bis 11,5 eingestellt.

Für die erfindungsgemäßen Beschichtungsstoffe der ersten und der zweiten Ausführungsvariante der Erfindung kann in einer zweckmäßigen Ausgestaltung auf Additiv d) zurückgegriffen werden, ausgewählt aus der Gruppe bestehend aus Verdickern, Entschäumern, Konservierungsmitteln, Stabilisatoren, insbesondere pH-Stabilisatoren, Flammschutzmitteln, Hydrophobierungsmitteln, Mattierungsmitteln, insbesondere Fällungskieselsäure, Oberflächenadditiven, insbesondere Silikonoberflächenadditiven, beispielsweise polyethermodifiziertes Polymethylalkylsiloxan und/oder Silikonpolyether-Copolymere, pH-Einstellmittel und Mischungen hiervon.

Geeignete pH-Stabilisatoren umfassen zum Beispiel Komplexierungsmittel, insbesondere mehrzähnige Komplexierungsmittel wie EDTA. Ferner sollen im Sinne der Erfindung unter geeignete pH-Einstellmittel zum Beispiel Natriumhydroxid, z.B. in Form von Natronlauge, Kaliumhydroxid wie auch flüchtige Neutralisationsmittel wie Ammoniaklösung und/oder Amine wie 2-Amino-2-methyl-1-propanol und/oder 2-Amino-2-ethyl-1,3-propandiol verstanden werden.

Unter den für die erfindungsgemäßen Beschichtungsstoffen zum Einsatz kommenden Verdickern sind solche bevorzugt, die ausgewählt sind aus der Gruppe bestehend aus Polyacrylat-Verdickern, Polyurethan-Verdickern, Polyharnstoff-Verdiekern, Cellulose-Verdickern, insbesondere Hydroxyethylcellulose und/oder Methylcellulose, Polyvinylalkohol-Verdickern, Polyetherpolyol-Verdickern, Schichtsilikat-Verdicker, Polysaccharid-Verdickern, insbesondere Xanthan, und beliebigen Mischungen hiervon.

Geeignete Verdicker auf Cellulose-Basis umfassen z.B. Cellulose, mikrokristalline Cellulose, Celluloseether und modifizierte Celluloseether, insbesondere hydrophob modifizierte Celluloseether, und auch Polysaccharide, die sich von den Galactomannosen ableiten, z.B. Polygalactomannosen, des Weiteren Polysaccharide auf Basis von Carrageen, Guarkernmehl, Xanthan und Johannisbrotkernmehl. Beispielhaft seien als modifizierte Celluloseether Methylcellulose, Hydroxypropylmethylcellulose, Hydroxyethylcellulose, Hydroxypropylcellulose, Ethylhydroxyethylcellulose und Natriumcarboxymethylcellulose, genannt. Als hydrophob modifizierte Celluloseether kommen z.B. die Reaktionsprodukte von Hydroxyethylcellulose oder Hydroxypropylcellulose mit dem Glycidylether von N-Ethyl-N-2-hydroxyethylperfluoroctansulfonamid (FC10-HEC) sowie nichtionische Celluloseether mit Methyl-, Hydroxyethyl- und Hydroxypropyl-Resten sowie mit einem langkettigen, über eine Etherbindung gebundenen Alkylrest mit 10 bis 24 Kohlenstoffatomen in Betracht.

Unter den Acrylatverdickern sind sogenannte HASE-Verdicker (hydrophobically modified alkali soluble emulsion) bevorzugt, und zwar insbesondere auf Basis von Copolymeren enthaltend oder bestehend aus Methylmethacrylat und/oder Methacrylsäure und Ethylacrylat. HASE-Verdicker können z.B. gewonnen werden aus Methacrylsäure als hydrophilem Monomer, einem Alkylvinylether als hydrophobem Monomer sowie Ethylacrylat, Butylacrylat und/oder Methylmethacrylat als weiterem Monomer zur Einstellung eines optimalen Gleichgewichts zwischen Wasserempfindlichkeit und Wasserverträglichkeit. Auch können vernetzte HASE-Verdicker eingesetzt werden. Diese verfügen regelmäßig über eine eingeschränkte Wasserlöslichkeit. Besonders geeignete Acrylatverdicker, insbesondere der HA-SE-Acrylatverdicker, weisen ein zahlenmittleres Molekulargewicht $M_n$ im Bereich von 100 bis 300 kDa, bevorzugt im Bereich von 150 bis 250 kDa, z.B. im Bereich von 170 bis 200 kDa, und/oder ein gewichtsmittleres Molekulargewicht $M_n$ im Bereich von 400 bis 800 kDa, bevorzugt im Bereich von 500 bis 700 kDa, z.B. im Bereich von 550 bis 650 kDa, auf.

Geeignete Polyurethan-Verdicker basieren im einfachsten Fall auf einem hydrophilen Mittelblock aus Poly(ethylenoxid) (PEO)-Einheiten, an den durch Umsetzung mit einem Diisocyanat und einem Fettalkohol über Urethanbindungen zwei hydrophobe Endsegmente angeknüpft wurden. Bei Polyurethan-Verdickern handelt es sich somit im Allgemeinen um nichtionische verzweigte oder unverzweigte Blockcopolymere aus Polyethylenoxid-Ketten, Polypropylenoxid-Ketten oder Poly(ethylenoxid-propylenoxid)-Ketten, die über Urethanbindungen miteinander verknüpft sind und die endständige langkettige Alkyl- oder Alkylengruppen mit 8 bis 30, vorzugsweise 10 bis 24 und besonders bevorzugt 12 bis 20 Kohlenstoffatomen oder Aryl- oder alkylierte Arylgruppen mit 6 bis 30, vorzugsweise 6 bis 20 Kohlenstoffatomen tragen. Typische Alkylgruppen sind beispielsweise Dodecyl- oder Stearyl-Gruppen, eine typische Alkylengruppe ist beispielsweise eine Oleylgruppe, eine typische Arylgruppe ist die Phenylgruppe und eine typische alkylierte Arylgruppe ist beispielsweise eine Nonylphenylgruppe, Geeignete Polyurethan-Verdicker sind dem Fachmann bekannt. Das Molekulargewicht solcher Polyurethanverdicker liegt üblicherweise im Bereich von $10^4$ bis $10^5$ g/mol.

Geeignete Verdicker auf Basis von Schichtsilikaten können ausgewählt sein aus der Gruppe bestehend aus Smectit, Montmorillonit, Hectorit und Bentonit oder deren Mischungen. Neben den herkömmlichen, d.h. den nicht organisch modifizierten bzw. nicht in delamierter Form vorliegenden Schichtsilikaten, kann man zusätzlich oder alternativ des Weiteren auch auf organisch modifizierte Schichtsilikate als Verdicker zurückgreifen. Organisch modifizierte Schichtsilikate sind dem Fachmann bekannt und sind auch im Handel erhältlich. Hierbei handelt es sich um sogenannte delaminierte Schichtsilikate, bei denen in der Schichtenstruktur, d.h. zwischen den Schichten kationische organische Verbindungen vorliegen. Man spricht hier auch von Interkalationsverbindungen. Besonders bevorzugt erhält man solche delaminierten Schichtsilikate mittels Modifizierung mit Alkylammonium- oder Ammoniumalkoxylat- Verbindungen.

Geeignete Polyether-Polyol-Verdicker sind dem Fachmann bekannt. Exemplarisch sei auf "Wässrige Siliconharz-Beschichtungssysteme für Fassaden", Wolfgang Schultze, 2. Aufl., Seiten 345 bis 347, verwiesen (ISBN 3-8169-1966-9).

Nachfolgend sind beispielhaft einige geeignete erfindungsgemäße wässrige Beschichtungsstoffe in Form von Dispersionsfarben bzw. Grundierungen wiedergegeben (Mengenangaben in Gewichtsprozent bezogen auf das Gesamtgewicht des Beschichtungsstoffes):

Tabelle 1:

| Inhaltsstoff | Beispiel 1 | Beispiel 2 | Beispiel 3 |
|---|---|---|---|
| Wasser | 49,02 | 38,52 | 36,02 |
| Füllstoff D50 0,9 $\mu$m | 24 | 20 | 20 |
| Füllstoff D50 14 $\mu$m | 8,0 | 12 | 12 |
| weiterer Füllstoff | 12 | 10 | 10 |
| Titandioxid | 0,98 | 0,98 | 0,98 |
| Additive | 2,0 | 2,0 | 2,0 |
| Wasserglas | 1,5 | 1,5 | 1,5 |
| Polymerdispersion | 2,5 | 5,0 | 7,5 |
| Polymerhohlteilchen | - | 10 | 10 |

Tabelle 2:

| Inhaltsstoff | Beispiel 1 | Beispiel 2 | Beispiel 3 |
|---|---|---|---|
| Wasser | 40,55 | 40,56 | 39,45 |
| Verdicker (Cellulose, Acrylatverd.) | 0,30 | 0,30 | 0,30 |
| Stabilisator | - | - | 0,50 |
| Dispergiermittel | 0,40 | 0,40 | 0,40 |
| Titandioxid | - | 0,99 | - |

(fortgesetzt)

| Inhaltsstoff | Beispiel 1 | Beispiel 2 | Beispiel 3 |
|---|---|---|---|
| Silikatischer Füllstoff (D50 7 $\mu$m) | 2,00 | 2,00 | 2,00 |
| Calcitischer Füllstoff (D50 2 $\mu$m) | 9,00 | 8,00 | 9,00 |
| Silikatischer Füllstoff (D50 1,5 $\mu$m) | 10,00 | 10,00 | 10,00 |
| Silikatischer Füllstoff (D50 16 $\mu$m) | 2,00 | 2,00 | 2,00 |
| Calcitischer Füllstoff (D50 0,9 $\mu$m) | 9,00 | 9,00 | 9,00 |
| Styrolacrylat (Polymerdispersion) | 3,75 | 3,75 | 3,75 |
| Calcitischer Füllstoff (D50 15 $\mu$m) | 21,00 | 21,00 | 21,00 |
| Kaliummethylsiliconat | - | - | 0,60 |
| Additive (Wachse, Entschäumer, Konservierungsmittel, PU-Verdicker) | 2,00 | 2,00 | 2,00 |

Tabelle 3:

| Inhaltsstoff | Beispiel 1 | Beispiel 2 |
|---|---|---|
| Wasser | 34,75 | 34,76 |
| Verdicker (Cellulose, Acrylatverd.) | 0,20 | 0,20 |
| Stabilisator | 0,30 | 0,30 |
| Netzmittel | 0,40 | 0,40 |
| Titandioxid | | 0,99 |
| Styrolacrylat (Polymerdispersion) | 4,25 | 4,25 |
| Calcitischer Füllstoff (D50 0,9 $\mu$m) | 11,00 | 11,00 |
| Silikatischer Füllstoff (D50 35 $\mu$m) | 2,00 | 2,00 |
| Calcitischer Füllstoff (D50 15 $\mu$m) | 14,00 | 14,00 |
| Silikatischer Füllstoff (D50 1,5 $\mu$m) | 2,00 | 2,00 |
| Calcitischer Füllstoff (D50 2 $\mu$m) | 9,00 | 9,00 |
| Calcitischer Füllstoff (D50 5 $\mu$m) | 5,00 | 5,00 |
| Calcitischer Füllstoff (D50 23 $\mu$m) | 15,00 | 14,00 |
| Kaliummethylsiliconat | 0,20 | 0,20 |
| Additive (Entschäumer) | 1,00 | 1,00 |
| Wasserglas (Kaliwasserglas 28%-ig) | 0,90 | 0,90 |

Überraschend hat sich gezeigt, dass mit den erfindungsgemäßen Beschichtungsstoffen auch solche zugänglich sind, die im Wesentlichen frei von Konservierungsmitteln, bevorzugt frei von organischen bioziden Konservierungsmitteln, besonders bevorzugt frei von Topf-und/oder Filmkonservierungsmitteln sein können.

Die der Erfindung zu Grunde liegende Aufgabe wird des Weiteren gelöst durch Farb- oder Grundierungsanstriche auf Substratoberflächen, erhalten oder erhältlich durch ein- oder mehrmaliges Auftragen der erfindungsgemäßen Beschichtungsstoffe der erste und der zweiten Ausführungsvariante auf einer Substratoberfläche.

Mit der vorliegenden Erfindung geht die überraschende Erkenntnis einher, dass sich durch den kombinierten Einsatz von speziell ausgewählten Füllstoff in vorgegebenen Mengenbereichen und in vorgegebenen Partikelgrößenbereichen wässrige Beschichtungsstoffe erhalten lassen, die ohne bzw. nahezu ohne Titandioxid auskommen, gleichwohl ein zufriedenstellendes Nass- und Trockendeckvermögen zeigen. Demgemäß gelingt mit den erfindungsgemäßen wässrigen Beschichtungsstoffen aufgrund des Verzichts bzw. nahezu vollständigen Verzichts auf Titandioxid ein relativ kostengünstiger Zugang zu Grundierungs- bzw. Farbanstrichen, die sich durch ein hohes Deckvermögen und eine gute Nassabriebbeständigkeit auszeichnen. Die mit den erfindungsgemäßen Beschichtungsstoffen erhaltenen Beschichtungen liefern ein Trockendeckvermögen, das dem Trockendeckvermögen solcher Beschichtungsstoffe des Stands der Technik entspricht, die mit den üblichen, hohen Mengen mit Titandioxid ausgestattet sind. Als weiterer Vorteil hat sich bei den Beschichtungsstoffen gemäß der ersten und zweiten Ausführungsvariante der Erfindung herausgestellt, dass auch Beschichtungen mit matten oder stumpfmatten Glanzgraden bei gleichzeitig gutem Deckvermögen zugänglich sind.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

**Patentansprüche**

1. Wässriger Beschichtungsstoff, insbesondere für Fassadenbeschichtungen, bestehend aus oder enthaltend

   aa) Füllstoffe, bestehend aus oder umfassend

   aa1) mindestens einen ersten Füllstoff aa1) mit einem D50-Wert im Bereich von 0,40 bis 1,2 $\mu$m, bevorzugt im Bereich von 0,50 bis 1,1 $\mu$m und besonders bevorzugt im Bereich von 0,50 bis 1,0 $\mu$m,
   aa2) mindestens einen zweiten Füllstoff aa2), bestehend aus oder umfassend mindestens einen silikatischen Füllstoff, bevorzugt Zeolithe und/oder Schichtsilikate, besonders bevorzugt Kaolinite, Feldspate und/oder Muskovite, und
   aa3) gegebenenfalls mindestens einen dritten Füllstoff aa3) mit einem D50-Wert im Bereich von größer 1,2 bis 4,0 $\mu$m, bevorzugt im Bereich von 1,2 bis 3,7 $\mu$m und besonders bevorzugt im Bereich von 1,3 bis 3,3 $\mu$m, sowie
   aa4) gegebenenfalls mindestens einen weiteren Füllstoff, der nicht erster (aa1)), zweiter (aa2)) und dritter Füllstoff (aa3)) ist und der einen D50-Wert im Bereich von größer 4,0 bis 40 $\mu$m, bevorzugt im Bereich von 5,0 bis 30 $\mu$m und besonders bevorzugt im Bereich von 6,0 bis 25 $\mu$m, aufweist,

   b) mindestens ein organisches Bindemittel,
   c) kein Titandioxid oder Titandioxid in einer Menge, gerechnet als Feststoffanteil, kleiner 1,0 Gewichtsprozent, und
   d) mindestens ein Additiv sowie
   e) gegebenenfalls mindestens ein Wasserglas und/oder Kieselsol, insbesondere Wasserglas,
   f) gegebenenfalls mindestens ein Alkylalkoxysilan, Alkylalkoxysiloxan, wasserlösliches Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon und
   g) gegebenenfalls mindestens ein Pigment, das nicht Titandioxid ist;

2. Beschichtungsstoff nach Anspruch 1, ferner umfassend

   h) mindestens ein Dispergiermittel und/oder mindestens ein Netzmittel.

3. Beschichtungsstoff nach Anspruch 1 oder 2, umfassend
   5 bis 65 Gewichtsprozent, bevorzugt 10 bis 60 Gewichtsprozent, Füllstoffe aa), und/oder
   0,50 bis 20 Gewichtsprozent, vorzugsweise 1 bis 20 Gewichtsprozent und besonders bevorzugt 1,5 bis 15 Gewichtsprozent Polymerdispersion b), jeweils bezogen auf den Festgehalt, und/oder
   0 bis 0,99 Gewichtsprozent, bevorzugt 0,20 bis 0,98 Gewichtsprozent und besonders bevorzugt 0,30 bis 0,95 Gewichtsprozent, Titandioxid c), und/oder
   0,10 bis 5,0 Gewichtsprozent, bevorzugt 0,20 bis 4,5 Gewichtsprozent und besonders bevorzugt 0,30 bis 3,0 Gewichtsprozent, an Additiven d), jeweils bezogen auf den Fest- bzw. Reinstoffanteil, und/oder
   0 bis 20 Gewichtsprozent, bevorzugt 0,50 bis 15 Gewichtsprozent, an Pigment g), das nicht Titandioxid ist, und/oder
   0 bis 3,0 Gewichtsprozent, vorzugsweise 0,10 bis 2,0 Gewichtsprozent, besonders bevorzugt 0,15 bis 1,0 Gewichtsprozent, an Komponente f), bevorzugt Alkalialkylsilikonat, besonders bevorzugt Kaliummethylsilikonat, und/oder
   0 bis 5,0 Gewichtsprozent, bevorzugt 0,30 bis 3,0 Gewichtsprozent und besonders bevorzugt 0,50 bis 2,0 Gewichtsprozent, jeweils bezogen auf den Feststoffanteil, an Wasserglas e) und vorzugsweise kein Kieselsol, und/oder
   0,05 bis 3,0 Gewichtsprozent, vorzugsweise 0,10 bis 2,0 Gewichtsprozent, besonders bevorzugt 0,15 bis 1,0 Gewichtsprozent, an dem mindestens einen Dispergier-und/oder Netzmittel h),
   wobei die den Beschichtungsstoff bildenden Komponenten in der Summe sich stets zu 100,0 Gewichtsprozent addieren.

4. Beschichtungsstoff nach Anspruch 1, 2 oder 3, insbesondere nach Anspruch 3, **dadurch gekennzeichnet, dass** die Füllstoffe aa)
   2 bis 35 Gewichtsprozent, bevorzugt 4 bis 25 Gewichtsprozent und besonders bevorzugt 6 bis 15 Gewichtsprozent, an dem ersten Füllstoff gemäß aa1), insbesondere Calciumcarbonat, und
   2 bis 25 Gewichtsprozent, bevorzugt 4 bis 20 Gewichtsprozent und besonders bevorzugt 5 bis 17 Gewichtsprozent, an dem ersten Füllstoff gemäß aa2), insbesondere calciniertes Kaolin, sowie
   0 bis 35 Gewichtsprozent, bevorzugt 4 bis 30 Gewichtsprozent und besonders bevorzugt 10 bis 25 Gewichtsprozent, an dem dritten Füllstoff gemäß aa3), insbesondere Calciumcarbonat, und
0 bis 61 Gewichtsprozent, bevorzugt 6 bis 35 Gewichtsprozent und besonders bevorzugt 10 bis 30 Gewichtsprozent, an dem weiteren Füllstoff gemäß aa4) umfassen oder hieraus bestehen, wobei die Füllstoffe aa1) und aa2) sowie gegebenenfalls aa3) und aa4) sich stets zu einen Füllstoffgehalt im Bereich von 5 bis 65 Gewichtsprozent, bevorzugt im Bereich von 10 bis 60 Gewichtsprozent, addieren.

5. Beschichtungsstoff nach einem der vorangehenden Ansprüche, **gekennzeichnet durch**
eine berechnete Pigment-Volumen-Konzentration (PVK) die der kritischen Pigment-Volumen-Konzentration der aus dem Beschichtungsstoff erhältlichen Beschichtung entspricht oder die vorzugsweise oberhalb dieser kritischen Pigment-Volumen-Konzentration liegt.

6. Beschichtungsstoff nach einem der vorangehenden Ansprüche, **dadurch gekennzeichnet, dass**
der mindestens eine erste Füllstoff aa1) ausgewählt ist aus der Gruppe bestehend aus silikatischen Füllstoffen, Calciumcarbonat-basierten Füllstoffen und beliebigen Mischungen hiervon, bevorzugt Calciumcarbonat; und/oder dass der Füllstoff aa2) calcinierte oder nicht-calcinierte Schichtsilikate darstellen, bevorzugt Kaolinite, Feldspate und/oder Muskovite, und besonders bevorzugt calciniertes Kaolin, und/oder dass
der mindestens eine dritte Füllstoff aa3) ausgewählt ist aus der Gruppe bestehend aus Calciumcarbonat-basierten Füllstoffen, bevorzugt Calciumcarbonat, silikatischen Füllstoffen und beliebigen Mischungen hiervon und/oder dass der weitere Füllstoff aa4) ausgewählt ist aus der Gruppe bestehend aus Calciumcarbonat-basierten Füllstoffen, silikatischen Füllstoffen und beliebigen Mischungen hiervon und insbesondere Calciumcarbonat, Muskovit, Natriumfeldspat und/oder Glimmer darstellt.

7. Wässriger Beschichtungsstoff, insbesondere für Innenraumbeschichtungen, bestehend aus oder enthaltend

ab) Füllstoffe, bestehend aus oder umfassend

ab1) einen ersten Füllstoff ab1) mit einer mindestens bimodalen, insbesondere bimodalen, Korngrößenverteilung mit einem ersten lokalen Maximum im Bereich von 0,40 bis 1,5 $\mu$m, bevorzugt im Bereich von 0,60 bis 1,2 $\mu$m, und einem zweiten lokalen Maximum im Bereich von 6,0 bis 22 $\mu$m, bevorzugt im Bereich von 7,0 bis 19 $\mu$m, und/oder
ab2) einen zweiten Füllstoff ab2-1) mit einem mittleren Partikeldurchmesser D50 im Bereich von 0,40 bis 1,5 $\mu$m, bevorzugt im Bereich von 0,60 bis 1,2 $\mu$m, und einen dritten Füllstoff ab2-2) mit einem mittleren Partikeldurchmesser D50 im Bereich von 6,0 bis 22 $\mu$m, bevorzugt im Bereich von 7,0 bis 19 $\mu$m,
ab3) gegebenenfalls mindestens einen weiteren Füllstoff ab3), der nicht ein Füllstoff gemäß ab1) und ab2) ist,

b) mindestens ein organisches Bindemittel,
c) kein Titandioxid oder Titandioxid in einer Menge, gerechnet als Feststoffanteil, kleiner 1,0 Gewichtsprozent, bezogen auf das Gesamtgewicht des Beschichtungsstoffs, und
d) mindestens ein Additiv sowie
e) gegebenenfalls mindestens ein Wasserglas und/oder Kieselsol, insbesondere Wasserglas,
f) gegebenenfalls Alkylalkoxysilan, Alkylalkoxysiloxan, wasserlösliches Alkalialkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon, und
g) gegebenenfalls mindestens ein Pigment, das nicht Titandioxid ist.

8. Beschichtungsstoff nach Anspruch 7, ferner umfassend h) mindestens ein Dispergiermittel und/oder mindestens ein Netzmittel.

9. Beschichtungsstoff nach Anspruch 7 oder 8, umfassend
5 bis 65 Gewichtsprozent, bevorzugt 10 bis 60 Gewichtsprozent, Füllstoffe ab), und/oder
0,50 bis 20 Gewichtsprozent, vorzugsweise 1 bis 20 Gewichtsprozent und besonders bevorzugt 1,5 bis 15 Gewichtsprozent Polymerdispersion b), jeweils bezogen auf den Festgehalt, und/oder
0 bis 0,99 Gewichtsprozent, bevorzugt 0,20 bis 0,98 Gewichtsprozent und besonders bevorzugt 0,30 bis 0,95 Gewichtsprozent, Titandioxid c), und/oder
0 bis 5,0 Gewichtsprozent, bevorzugt 0,30 bis 3,0 Gewichtsprozent und besonders bevorzugt 0,50 bis 2,0 Gewichtsprozent, jeweils bezogen auf den Feststoffanteil, an Wasserglas e) und vorzugsweise kein Kieselsol, und/oder

0,10 bis 5,0 Gewichtsprozent, bevorzugt 0,20 bis 4,5 Gewichtsprozent und besonders bevorzugt 0,30 bis 3,0 Gewichtsprozent, an Additiven d), jeweils bezogen auf den Fest- bzw. Reinstoffanteil, und/oder

0 bis 3,0 Gewichtsprozent, vorzugsweise 0,10 bis 2,0 Gewichtsprozent, besonders bevorzugt 0,15 bis 1,0 Gewichtsprozent, an Komponente f), bevorzugt Alkalialkylsilikonat, besonders bevorzugt Kaliummethylsilikonat, und/oder

0 bis 20 Gewichtsprozent, bevorzugt 0,50 bis 15 Gewichtsprozent, an Komponente g), und/oder

0,05 bis 3,0 Gewichtsprozent, vorzugsweise 0,10 bis 2,0 Gewichtsprozent, besonders bevorzugt 0,15 bis 1,0 Gewichtsprozent, an Komponente h),

wobei die den Beschichtungsstoff bildenden Komponenten in der Summe sich stets zu 100,0 Gewichtsprozent addieren.

10. Beschichtungsstoff nach Anspruch 7, 8 oder 9, insbesondere nach Anspruch 9, **dadurch gekennzeichnet, dass** die Füllstoffe ab)

4 bis 50 Gewichtsprozent, bevorzugt 5 bis 40 Gewichtsprozent und besonders bevorzugt 10 bis 30 Gewichtsprozent, an dem ersten Füllstoff gemäß ab1), insbesondere Calciumcarbonat, und

1 bis 61 Gewichtsprozent, bevorzugt 2 bis 30 Gewichtsprozent, an dem weiteren Füllstoff gemäß ab3),

oder

2 bis 30 Gewichtsprozent, bevorzugt 4 bis 27 Gewichtsprozent und besonders bevorzugt 8 bis 25 Gewichtsprozent, an dem zweiten Füllstoff gemäß ab2), insbesondere mindestens einen silikatischen Füllstoff, und

2 bis 30 Gewichtsprozent, bevorzugt 4 bis 27 Gewichtsprozent und besonders bevorzugt 8 bis 25 Gewichtsprozent, an dem dritten Füllstoff gemäß ab2), insbesondere synthetischem Calciumcarbonat, und

1 bis 61 Gewichtsprozent, bevorzugt 4 bis 30 Gewichtsprozent und besonders bevorzugt 8 bis 20 Gewichtsprozent, an dem weiteren Füllstoff gemäß ab3) umfassen oder hieraus bestehen, wobei die Füllstoffe ab1) und ab2) sowie gegebenenfalls ab3) sich stets zu einen Füllstoffgehalt im Bereich von 5 bis 65 Gewichtsprozent, bevorzugt im Bereich von 10 bis 60 Gewichtsprozent, addieren.

11. Beschichtungsstoff nach einem der Ansprüche 7 bis 10, **gekennzeichnet durch** eine berechnete Pigment-Volumen-Konzentration (PVK) die der kritischen Pigment-Volumen-Konzentration der aus dem Beschichtungsstoff erhältlichen Beschichtung entspricht oder die vorzugsweise oberhalb dieser kritischen Pigment-Volumen-Konzentration liegt.

12. Beschichtungsstoff nach einem der Ansprüche 7 bis 11, **dadurch gekennzeichnet, dass** der mindestens eine erste Füllstoff ab1) ausgewählt ist aus der Gruppe bestehend aus silikatischen Füllstoffen, Calciumcarbonat-basierten Füllstoffen und beliebigen Mischungen hiervon, bevorzugt Calciumcarbonat; und/oder dass der Füllstoff ab2-1) und der Füllstoff ab2-2) calcinierte oder nicht-calcinierte Schichtsilikate darstellen, bevorzugt Kaolinite, Feldspate und/oder Muskovite, und besonders bevorzugt calciniertes Kaolin, und/oder dass der weitere Füllstoff ab3) ausgewählt ist aus der Gruppe bestehend aus Calciumcarbonat-basierten Füllstoffen, silikatischen Füllstoffen und beliebigen Mischungen hiervon und insbesondere Calciumcarbonat, Muskovit, Natriumfeldspat und/oder Glimmer darstellt.

13. Beschichtungsstoff nach einem der vorangehenden Ansprüche, **dadurch gekennzeichnet, dass** dieser die mindestens eine Verbindung der Komponente f) enthält, bevorzugt wasserlösliches Alkalialkylsilikonat und besonders bevorzugt Kaliummethylsilikonat.

14. Beschichtungsstoff nach einem der vorangehenden Ansprüche, **dadurch gekennzeichnet, dass** dieser im Wesentlichen frei von Topf- und/oder Filmkonservierungsmitteln ist, bevorzugt frei von organischen bioziden Konservierungsmitteln und besonders bevorzugt frei von jeglichen Konservierungsmitteln.

15. Beschichtungsstoff nach einem der vorangehenden Ansprüche, **dadurch gekennzeichnet, dass** diese einen pH-Wert im Bereich von 8,5 bis 12, vorzugsweise im Bereich von 9 bis 11,5, aufweist oder auf einen pH-Wert im Bereich von 8,5 bis 12, vorzugsweise im Bereich von 9 bis 11,5, eingestellt ist.

16. Beschichtungsstoff nach einem der vorangehenden Ansprüche, **dadurch gekennzeichnet, dass** das mindestens eine Additiv d) ausgewählt ist aus der Gruppe bestehend aus Verdickern, Entschäumern, Konservierungsmitteln, Stabilisatoren, Flammschutzmitteln, Hydrophobierungsmitteln, Mattierungsmitteln, insbesondere Fällungskieselsäure, Oberflächenadditiven, insbesondere Silikonoberflächenadditiven, beispielsweise polyethermodifiziertes Polymethylalkylsiloxan und/oder Silikonpolyether-Copolymere und Mischungen hiervon.

17. Beschichtungsstoff nach einem der vorangehenden Ansprüche, **dadurch gekennzeichnet, dass**

dieser eine Dispersionsfarbe, eine Grundierung oder eine Putzmasse, insbesondere eine Dispersionsfarbe oder eine Grundierung, darstellt.

18. Färb- oder Grundierungsanstrich auf einer Substratoberfläche, erhalten oder erhältlich durch ein- oder mehrmaliges Auftragen des Beschichtungsstoffes nach einem der vorangehenden Ansprüche auf der Substratoberfläche.

19. Verwendung des Beschichtungsstoffes nach einem der Ansprüche 1 bis 17 für die Herstellung von oder als Dispersionsfarbe, insbesondere Fassadenfarbe, Grundierung oder Putzmasse.

Europäisches Patentamt
European Patent Office
Office européen des brevets

**EUROPÄISCHER RECHERCHENBERICHT**

Nummer der Anmeldung

EP 17 21 1222

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 942 376 A1 (STO SE & CO KGAA [DE]) 11. November 2015 (2015-11-11) | 1-12, 14-19 | INV. C09D5/02 C09D7/61 C09D7/40 |
| Y | * Absätze [0023], [0024], [0026]; Ansprüche 3-7; Beispiel 2 * | 13 | |
| X | EP 2 860 227 A1 (HENKEL AG & CO KGAA [DE]) 15. April 2015 (2015-04-15) * Absätze [0030], [0036], [0053]; Abbildung 1a; Beispiel 1; Tabelle 1 * | 1-6, 14-19 | |
| X | EP 0 332 102 A2 (PLUSS STAUFFER AG [CH]) 13. September 1989 (1989-09-13) * Seite 12, Zeilen 29-33; Beispiele I,II,V * | 1-6, 14-19 | |
| X | DE 10 2016 002221 A1 (BRILLUX GMBH & CO KG [DE]) 31. August 2017 (2017-08-31) | 1-6, 13-19 | |
| Y | * Absätze [0012] - [0017], [0018] - [0020], [0026]; Ansprüche 1-7,9-11 * | 13 | |
| X | DATABASE WPI Week 200469 Thomson Scientific, London, GB; AN 2004-705687 XP002780813, & KR 2003 0043071 A (KUNSUL CHEMICAL IND CO LTD) 2. Juni 2003 (2003-06-02) * Zusammenfassung * -& KR 2003 0043071 A (KUNSUL CHEMICAL IND CO LTD) 2. Juni 2003 (2003-06-02) * Anspruch 1; Beispiele 3-2, 4-2; Tabellen 3-5 * | 1-3, 5-12, 14-19 | RECHERCHIERTE SACHGEBIETE (IPC) C09D C08K |
| A | EP 1 908 803 A2 (DORMINERAL GMBH & CO KG [DE]) 9. April 2008 (2008-04-09) * Absätze [0025], [0047]; Tabellen 6,7 * | 1-19 | |

-/--

Der vorliegende Recherchenbericht wurde für alle Patentansprüche erstellt

| Recherchenort | Abschlußdatum der Recherche | Prüfer |
|---|---|---|
| München | 22. Januar 2019 | Schmitt, Johannes |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

**EUROPÄISCHER RECHERCHENBERICHT**

Nummer der Anmeldung

EP 17 21 1222

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 98/51860 A1 (MINERALS TECH INC [US]) 19. November 1998 (1998-11-19) * Seite 5, Zeile 12 - Seite 7, Zeile 16; Ansprüche 1-5,9-17; Abbildung 1; Beispiele 1,3; Tabellen 1,2,6,7 * * Seite 8, Zeilen 26-28 * * Seite 12, Zeile 20 - Seite 13, Zeile 11 * ----- | 9-12, 14-19 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 22. Januar 2019 | Schmitt, Johannes |

EPO FORM 1503 03.82 (P04C03)

Europäisches
Patentamt

European
Patent Office

Office européen
des brevets

Nummer der Anmeldung

EP 17 21 1222

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

## MANGELNDE EINHEITLICHKEIT
## DER ERFINDUNG
## ERGÄNZUNGSBLATT B

**Nummer der Anmeldung**

EP 17 21 1222

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-6(vollständig); 13-19(teilweise)

   wässriger Beschichtungsstoff bestehend aus oder enthaltend
   aa1) mindestens einen ersten Füllstoff aa1) mit einem D50-Wert im Bereich von 0,40 bis 1,2 Mikrometer
   aa2) mindestens einen zweiten Füllstoff aa2), bestehend aus oder umfassend mindestens einen silikatischen Füllstoff,
   b) mindestens ein organisches Bindemittel, c) kein Titandioxid oder Titandioxid in einer Menge, gerechnet als Feststoffanteil, kleiner 1,0 Gewichtsprozent, und
   d) mindestens ein Additiv.

   ---

2. Ansprüche: 7-12(vollständig); 13-19(teilweise)

   wässriger Beschichtungsstoff bestehend aus oder enthaltend
   ab) Füllstoffe, bestehend aus oder umfassend ab1) einen ersten Füllstoff ab1) mit einer mindestens bimodalen, insbesondere bimodalen, Korngrößenverteilung mit einem ersten lokalen Maximum im Bereich von 0,40 bis 1,5 Mikrometer, und einem zweiten lokalen Maximum im Bereich von 6,0 bis 22 Mikrometer,
   und/oder
   ab2) einen zweiten Füllstoff ab2-1) mit einem mittleren Partikeldurchmesser D50 im Bereich von 0,40 bis 1,5 Mikrometer und einen dritten Füllstoff ab2-2) mit einem mittleren Partikeldurchmesser D50 im Bereich von 6,0 bis 22 Mikrometer,
   b) mindestens ein organisches Bindemittel,
   c) kein Titandioxid oder Titandioxid in einer Menge, gerechnet als Feststoffanteil, kleiner 1,0 Gewichtsprozent, bezogen auf das Gesamtgewicht des Beschichtungsstoffs, und
   d) mindestens ein Additiv.

   ---

**ANHANG ZUM EUROPÄISCHEN RECHERCHENBERICHT**
**ÜBER DIE EUROPÄISCHE PATENTANMELDUNG NR.**          EP 17 21 1222

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-01-2019

| Im Recherchenbericht angeführtes Patentdokument | Datum der Veröffentlichung | Mitglied(er) der Patentfamilie | Datum der Veröffentlichung |
|---|---|---|---|
| EP 2942376 A1 | 11-11-2015 | KEINE | |
| EP 2860227 A1 | 15-04-2015 | BR 112016007672 A2 | 01-08-2017 |
| | | CN 105705592 A | 22-06-2016 |
| | | EP 2860227 A1 | 15-04-2015 |
| | | EP 3058033 A1 | 24-08-2016 |
| | | ES 2627776 T3 | 31-07-2017 |
| | | HU E033470 T2 | 28-12-2017 |
| | | PL 2860227 T3 | 29-09-2017 |
| | | WO 2015055555 A1 | 23-04-2015 |
| EP 0332102 A2 | 13-09-1989 | AT 111142 T | 15-09-1994 |
| | | AU 615520 B2 | 03-10-1991 |
| | | EP 0332102 A2 | 13-09-1989 |
| | | ES 2063773 T3 | 16-01-1995 |
| | | FI 891051 A | 08-09-1989 |
| | | JP H026560 A | 10-01-1990 |
| | | JP H0791487 B2 | 04-10-1995 |
| | | US 5120365 A | 09-06-1992 |
| DE 102016002221 A1 | 31-08-2017 | AU 2017223024 A1 | 13-09-2018 |
| | | BR 112018017074 A2 | 26-12-2018 |
| | | CA 3015720 A1 | 31-08-2017 |
| | | CN 108779346 A | 09-11-2018 |
| | | DE 102016002221 A1 | 31-08-2017 |
| | | DE 202017107111 U1 | 03-07-2018 |
| | | EP 3420038 A1 | 02-01-2019 |
| | | KR 20180117162 A | 26-10-2018 |
| | | WO 2017144694 A1 | 31-08-2017 |
| KR 20030043071 A | 02-06-2003 | KEINE | |
| KR 20030043071 A | 02-06-2003 | KEINE | |
| EP 1908803 A2 | 09-04-2008 | DE 102007047095 A1 | 03-04-2008 |
| | | EP 1908803 A2 | 09-04-2008 |
| WO 9851860 A1 | 19-11-1998 | AR 012710 A1 | 08-11-2000 |
| | | AT 275667 T | 15-09-2004 |
| | | AU 7376198 A | 08-12-1998 |
| | | BR 9809824 A | 20-06-2000 |
| | | CA 2290341 A1 | 19-11-1998 |
| | | CN 1260016 A | 12-07-2000 |
| | | DE 69826121 T2 | 22-09-2005 |
| | | EP 0981667 A1 | 01-03-2000 |
| | | ES 2229494 T3 | 16-04-2005 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT
ÜBER DIE EUROPÄISCHE PATENTANMELDUNG NR.**

EP 17 21 1222

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-01-2019

| Im Recherchenbericht angeführtes Patentdokument | Datum der Veröffentlichung | Mitglied(er) der Patentfamilie | | Datum der Veröffentlichung |
|---|---|---|---|---|
| | | HU | 0002757 A2 | 28-12-2000 |
| | | ID | 25913 A | 09-11-2000 |
| | | JP | 2001525894 A | 11-12-2001 |
| | | NO | 995603 A | 15-11-1999 |
| | | PL | 336992 A1 | 31-07-2000 |
| | | PT | 981667 E | 31-12-2004 |
| | | SK | 154599 A3 | 12-06-2000 |
| | | US | 5861209 A | 19-01-1999 |
| | | WO | 9851860 A1 | 19-11-1998 |
| | | ZA | 9803952 B | 16-11-1998 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202017104644 U1

**In der Beschreibung aufgeführte Nicht-Patentliteratur**

- **DELLEF GYSAU.** Füllstoffe - Grundlagen und Anwendungen. Vincentz Network GmbH & Co, 2005

- **WOLFGANG SCHULTZE.** *Wässrige Siliconharz-Beschichtungssysteme für Fassaden,* ISBN 3-8169-1966-9, 345-347